# EUROPEAN PATENT APPLICATION

(11) **EP 1 774 860 A1**
(43) Date of publication of application: **18.04.2007**
(21) Application number: 06121709.7
(22) Date of filing: 04.10.2006
(51) Int. Cl.: A23N 12/08

(54) **Continuous centrifugal drainer for vegetables**

(30) Priority: 14.10.2005 IT PD20050306
(71) Applicant: G.N.A. Packaging S.r.l., 40064 Ozzano Dell'Emilia BO (IT)
(72) Inventor: Augusti, Stefano, 30014 Cavarzere VE 30014 (IT); Bertolini, Maurizio, 45100 Rovigo (IT)
(74) Representative: Modiano, Micaela Nadia

(57) **Abstract**

A continuous centrifugal drainer for vegetables, particularly for leaf vegetables, characterized in that it comprises:
- at least one horizontal table (P), which rotates with a vertical central rotation axis (P1) and onto which a frame (P2) is fixed;
- one or more vertical drums (A, B), each of which rotates about the corresponding horizontal shaft (Aa, Ab), said shaft (Aa, Ab) being rigidly coupled to said frame (P2);
- at least one vegetable loading hopper (I), which is arranged above said drums (A, B) in a position that corresponds to said rotation axis (P1);
- at least one vegetable discharge outlet (Ua, Ub), which is provided on said horizontal table (P) in a position which is proximate to said rotation axis (P1);

and wherein the rotation of said drums (A, B) first moves the vegetables away from the rotation axis (P1) of said horizontal table (P) and then returns the vegetables toward said rotation axis (P1) and toward said outlet (Ua, Ub).

## Description

The present invention relates to machines for preparing ready-to-eat food products and in particular relates to machines for preparing vegetables and particularly for draining leaf vegetables, hereinafter referenced as drainers for the sake of brevity.

Currently, many food products are sold ready, or partially ready, to eat. For example, frozen pre-cooked food is known and requires, in order to eat it, only thawing and heating operations.

Food ready to cook, i.e., food products such as pasta or meat that is already filled and/or seasoned and require only the final cooking operation, are also known.

Packages of fresh vegetables, washed and dried and ready to eat, are also known.

In particular, leaf vegetables are washed accurately, deprived of the washing water, optionally cut into small pieces, mixed with other vegetables and divided into portions in packages in a modified atmosphere.

The operation for drying leaf vegetables, i.e., the removal of the washing water, is commonly known as draining.

Draining is currently performed by using centrifuges constituted by one or more rotating baskets, with walls which are perforated in order to allow the dripping and outflow of the washing water, and wherein each of said baskets is provided with a hatch for inserting the vegetables to be dried.

Said baskets rotate within an enclosure, inside which the water removed from the vegetables is collected and subsequently discharged.

The baskets of these centrifuges generally have a diameter on the order of 50-100 centimeters and turn for one or two minutes for each load of vegetables to be drained.

The efficiency of known centrifuges thus constituted depends not only on the size of the basket and on the rotation rate but also on the quantity of vegetables that is present in said basket during the draining step.

However, these centrifuges have several drawbacks.

First of all, these known centrifuges operate discontinuously, i.e., they work according to a cycle, and between two successive cycles the rotation of the baskets is interrupted to discharge the drained vegetables and the load of wet vegetables to be drained, with consequent long idle times.

In order to optimize production times, the frequency of the cycles is very high, causing considerable problems.

The many power-ons and power-offs of the motors cause wear of the motors more rapidly than would occur with continuous or with longer operating cycles.

Said motors and the moving mechanical parts are therefore stressed more intensely and subject to breakages, and therefore require frequent tuning and maintenance, causing stops in production and increases in management costs.

It is also known to use large baskets to increase the amount of vegetables to be dried in the time unit.

The vegetable leaves located at the edges of the basket undergo a greater centrifugal acceleration than those located at the center of the basket, since the forces that act vary as a function of the distance from the center.

In order to achieve adequate draining also of the vegetables that are in a more central position, it is therefore necessary to increase the rotation rate of the basket.

However, the high rotation rate causes tears and damage to the vegetables propelled against the walls of the baskets and accordingly causes early rotting and shorter life of the product.

Further, the larger the basket, the harder it is for the operator to remove the dried vegetables from the inside of said basket.

In addition to this, if the size of the baskets is increased, the overall mass of the rotating element increases, further overloading the rotating elements and thus accelerating their wear.

The use of hot and dry air tunnel-type drainers is also known for draining delicate vegetables, such as small and fragile leaf vegetables.

In turn, drying in tunnel drainers has other drawbacks.

First of all, it is not possible to introduce too many vegetables in the tunnel, because the hot air would not be able to dry the innermost leaves of the mass of vegetables.

The hot and dry environment in which the vegetables are placed within the tunnel causes the evaporation not only of the surface water but also of part of the moisture of the vegetables.

Therefore, the product treated in this manner is partially dehydrated and consequently damaged.

The aim of the present invention is to obviate the above mentioned drawbacks with a new draining machine which operates continuously, i.e., without requiring any interruption to load the vegetables to be drained and to unload the already-drained vegetables.

This aim and these and other objects that will become better apparent hereinafter are achieved with a continuous centrifugal draining machine for vegetables, particularly for leaf vegetables, the characteristics of which are defined in the appended claims.

Advantageously, the machine according to the invention consists of a carousel which comprises a rotating horizontal table, which is preferably circular and has a vertical central rotation axis.

A frame for supporting one or preferably at least two drums which rotate on a vertical plane is fixed above the horizontal table.

Each drum is a substantially cylindrical body which rotates about a horizontal shaft, which is rigidly coupled to said vertical supporting frame.

The drum comprises two side-by-side parallel rims, which are connected to said shaft by means of a suitable number of spokes or arms, and a cylindrical draining surface, which is arranged coaxially to said shaft and is fixed to the spokes of at least one of said rims and has a smaller diameter than said rims.

The cylindrical draining surface constitutes the bottom of the draining area into which the vegetables to be drained are loaded.

There is also at least one grille, or preferably an annular draining portion, which is flat and perforated; its smaller diameter is preferably equal to the diameter of the cylindrical surface and its larger diameter is preferably equal to the diameter of a rim.

The annular draining portion is thus fixed laterally between the lateral edge of said cylindrical surface and one of said rims and constitutes the lateral surface of the draining area.

The flat annular draining portion is provided with holes which are distributed uniformly on the entire surface and whose dimensions are such as to prevent the escape of the leaves but are sufficient to allow at the same time the outflow of the excess water.

Each drum further comprises at least one moving draining belt, which is arranged so as to adhere to the edges of both of said rims of the drum and constitutes the outer surface of the draining area and is kept tensioned by means of adapted tensioning rollers which are fixed to said drum supporting frame.

In this manner, the tensioning rollers keep the belt always in contact with the edges of said of the rims, even during the rotation of the drums.

The surface of the moving draining belt is perforated in order to allow the outflow of the excess water.

The drums are arranged substantially radially and symmetrically with respect to the center of rotation of the horizontal table of the carousel in order to ensure perfect balancing during rotation.

In particular, the preferred solution comprises two drums which are aligned along a diameter of the rotating horizontal table, i.e., they lie substantially on the same vertical plane of rotation.

The horizontal table rotates about its own vertical axis, while the drums maintain an unchanged position with respect to the horizontal table, since they are rigidly coupled to the supporting frame, which is rigidly coupled to said table.

The drums also have a rotary motion about their own axis, i.e., around the corresponding horizontal shaft.

A first motor turns the horizontal table about the vertical axis, while at least one other motor directly or indirectly turns each drum about the corresponding horizontal shaft and/or moves each moving belt.

The rotation rate of the drums and of the horizontal table can be kept at rather low values, consequently reducing power consumption and wear.

The operation of the present invention entails that the vegetables to be drained are introduced into the drainer from above, by means of a loading hopper which is arranged at the vertical axis of the rotating horizontal table.

By means of the loading hopper, the vegetables are introduced within the draining area, which is delimited in a lower region by said cylindrical draining surface, in an upper region by said moving draining belt, and laterally by said annular draining portion.

The leaves of vegetables introduced within the drainer thus assume a combined motion of the two rotary motions of the horizontal table and of the drum, which respectively impart to the individual leaves a centrifugal force which is directed radially toward the outside of the horizontal rotating table and toward the outside of the drum.

The combined action of these two forces produces a centrifugal force which propels the leaves toward the annular draining portion and toward the moving draining belt.

Each moving draining belt is arranged so as to adhere to the corresponding drum in order to prevent the escape of the vegetables, which are propelled outward due to the centrifugal force produced by the rotary motion of the horizontal table and of the drums.

For this purpose, the moving belt is arranged preferably only at the outer semicircle of the drum, as described in greater detail hereinafter.

The leaves are thus retained by the draining surfaces, while the washing water escapes through the holes of the annular draining portion and of the moving draining belt.

In this manner, the vegetables are drained, eliminating the excess water.

The rotation of the drum entrains the leaves in his rotary motion from the upper part, proximate to the loading hopper, toward the outside, moving them away from the center of rotation.

The rotation of the drum moves the leaves downward and then toward the center of the horizontal table, where the centrifugal force produced by the rotary motion of said horizontal table becomes nil.

In this position, the vegetables contained in the drainer fall downward, exiting from the draining area through an outlet provided in said horizontal table.

One or more conveyor belts for removing the drained leaves are positioned below the draining outlet.

To facilitate the unloading of the vegetables, the moving draining belt comprises a series of blades or fins, which protrude and are designed to convey the leaves of vegetables that adhere to the annular portion and to the belt itself.

At the discharge outlet provided in the horizontal table there is also a substantially vertical wall, which facilitates the unloading of the leaves, preventing them from being entrained beyond the opening by the rotation of the drum.

The present invention further comprises an external enclosure, which is adapted to enclose the horizontal table, the drums and the moving draining belts and comprises an upper opening for accessing the loading hopper, a lower opening for unloading the vegetables, at least one duct for discharging the draining water, and one or more doors for inspection and maintenance.

According to an alternative solution, the present invention comprises only one drum, constituted as described, and counterweight masses in order to maintain perfect balancing during rotation.

Further characteristics and advantages of the continuous centrifugal drainer according to the invention will become better apparent from the following detailed description illustrated in the accompanying drawing, given by way of non-limiting example, wherein:
Figure 1 is a sectional view, taken along a vertical plane, of one of the two drums of the drainer according to the invention;
Figure 2 is a schematic top view of the arrangement of the two drums of the drainer;
Figure 3 is a front view of the drainer in the completely assembled condition.

The drainer according to the invention comprises a rotating carousel, which is constituted by a horizontal table P, which is preferably circular and rotates about a vertical central rotation axis P1.

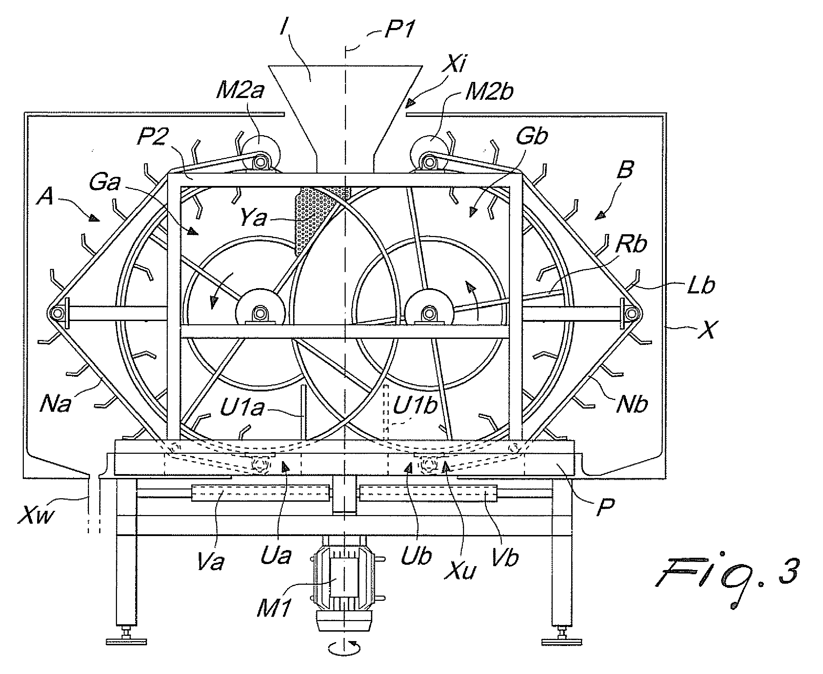

A frame P2 is fixed above the horizontal table P and is designed to support two drums A, B (Figure 3), which are arranged vertically and rotate about the corresponding horizontal shaft Aa, Ab, which is rigidly coupled to the supporting frame P2.

The drum A is constituted by two side-by-side parallel rims C1a, C2a, which are connected to the shaft Aa by means of a suitable number of spokes or arms Ra.

The drum A further comprises a cylindrical draining surface Sa, which is arranged coaxially to the shaft Aa and is fixed to the spokes Ra of at least one of the rims C1a and has a smaller diameter than the said rims C1a, C2a.

The drum A further comprises at least one flat and perforated annular draining portion Ka, which is fixed laterally between the lateral edge of the cylindrical draining surface Sa and one of the rims C1a; its smaller diameter is equal to the diameter of the cylindrical draining surface Sa and its larger diameter is equal to the diameter of the rims C1a, C2a.

The drainer further comprises at least one moving draining belt Na, Nb for each of the drums A, B.

In particular, the moving draining belt Na is arranged so as to adhere externally to both of the rims C1a, C2a of the drum A and is kept tensioned by means of suitably provided tensioning rollers N1a, N2a, N3a, which are fixed to the frame P2 for supporting the drum A.

The moving draining belt Na is arranged only in the region involved in containing the vegetables, i.e., on the outer lateral semicircle of the corresponding drum A, toward which the vegetables are propelled due to the centrifugal force produced by the rotary motion of the horizontal table P and of the drum A.

The surface of the moving draining belt Na is perforated.

The draining area Ga, i.e., the space into which the vegetables to be drained are introduced, is delimited in a lower region by the cylindrical draining surface Sa of the drum A, in an upper region by the moving draining belt Na, and laterally by the annular draining portion Ka.

The second drum B is provided in a manner similar to the drum A, i.e., it is likewise constituted by two rims C1b, C2b with corresponding spokes Rb, by a cylindrical draining surface Sb and by at least one annular draining portion Kb.

The moving draining belt Nb of the second drum B is provided and arranged in a manner which is similar and symmetrical to the moving draining belt Na of the drum A and is kept tensioned by means of appropriately provided tensioning rollers N1b which are fixed to the supporting frame P2.

The moving draining belt Nb, the cylindrical draining surface Sb and the annular draining portion Kb delimit the draining area Gb of the drum B.

The drums A, B are substantially aligned along a diameter of the horizontal plane P and intersect each other, i.e., they lie substantially on the same vertical plane of rotation.

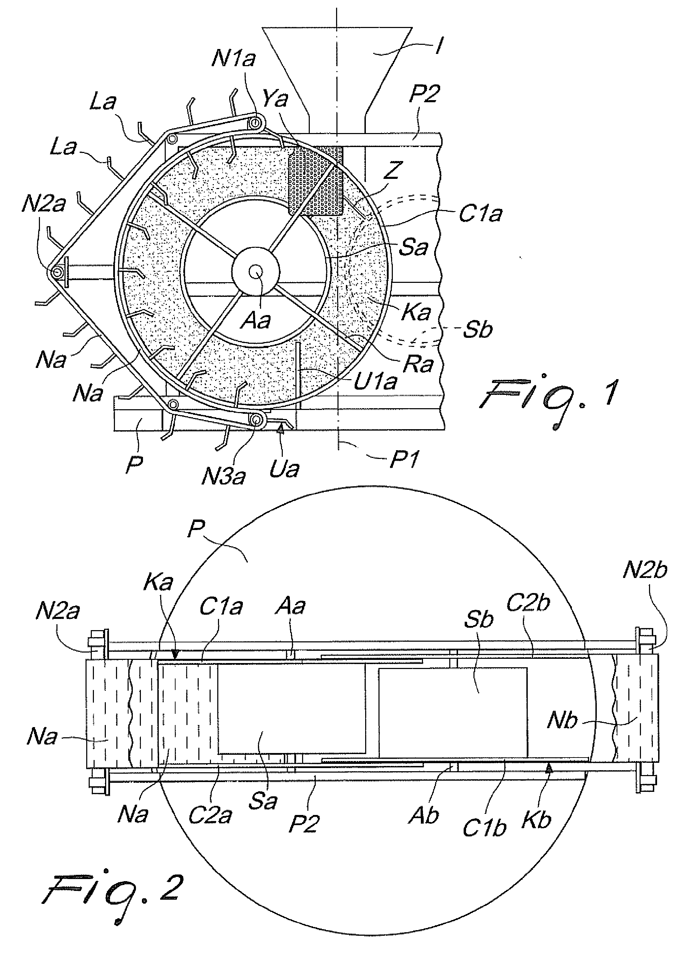

In the detail view of Figure 2, the drums A, B are arranged so that both of the corresponding draining areas Ga, Gb are connected to the outside through at least one upper loading hopper I, which is arranged at the vertical rotation axis P1 of the horizontal table P.

In particular, the cylindrical draining surfaces Sa, Sb of each drum A, B are aligned and proximate to each other.

The cylindrical draining surfaces Sa, Sb are separated by a dividing partition Z, which is shaped like an inverted letter V so as to convey the vegetables introduced through the loading hopper I into the draining area Ga of the drum A or into the draining area Gb of the drum B.

The drainer further comprises one or more flat partitions Ya, which are rigidly coupled to said supporting frame P2, are arranged vertically and laterally with respect to each drum A, B, on the opposite side with respect to the annular draining portion Ka, Kb below the loading hopper I.

The flat partitions Ya are designed to prevent lateral escapes of the vegetables during loading.

The horizontal table P rotates about its own vertical axis P1, while the drums A, B maintain an unchanged position with respect to the horizontal plane P, being rigidly coupled to the supporting frame P2, which is rigidly coupled to the horizontal table P.

The drums A, B also rotate about the corresponding horizontal shaft Aa, Ab.

A first actuation motor M1 turns the horizontal table P about the corresponding axis P1, while at least one second motor M2a, M2b directly or indirectly produces the movement of the moving belts Na, Nb.

The second motor M2a, M2b further directly or indirectly turns each drum A, B about the corresponding shaft Aa, Ab.

The horizontal table P has a diameter on the order of 4-5 meters, while the drums A, B have a diameter of approximately 2 meters.

The considerable dimensions of the drums A, B and of the horizontal table P therefore allow to obtain centrifugal forces that are sufficient to ensure optimum dripping capacity although the rotation rate is kept relatively low.

In particular, the rotating table P has a rotation rate of approximately 200 rpm, while the drums A, B can have much lower speeds, equal to 20 rpm.

The new drainer also comprises one or more discharge outlets Ua, Ub, provided on the horizontal table P proximate to the center of the horizontal plane P itself, i.e., proximate to the axis P1.

To facilitate the operation for unloading the vegetables, each moving draining belt Na, Nb comprises a series of protruding vanes or blades La, Lb, which are designed to convey the leaves of vegetables that adhere to the annular portion Ka, Kb and to the moving draining belt Na, Nb itself.

A wall U1a, U1b is also arranged at each discharge outlet Ua, Ub in a substantially vertical position and is adapted to cause the leaves to fall into the discharge outlet Ua, Ub, thus preventing their entrainment beyond the discharge outlet Ua, Ub by the rotation of the corresponding drum A, B.

Moreover, below the discharge outlets Ua, Ub the drainer preferably comprises one or more conveyor belts Va, Vb for conveying the drained vegetables to the subsequent steps of the production process.

The drainer further comprises an external enclosure X, which encloses the horizontal table P, the drums A, B and the moving draining belts Na, Nb and comprises an upper opening Xi (Figure 3) for accessing the loading hopper I, a lower opening Xu for unloading the vegetables, at least one discharge duct Xw for the draining water, and one or more hatches for the inspection and maintenance operations.

The disclosures in Italian Patent Application No. PD2005A000306 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A continuous centrifugal drainer for vegetables, particularly for leaf vegetables, **characterized in that** it comprises:
- at least one horizontal table (P), which rotates with a vertical central rotation axis (P1) and onto which a frame (P2) is fixed;
- one or more vertical drums (A, B), each of which rotates about the corresponding horizontal shaft (Aa, Ab), said shaft (Aa, Ab) being rigidly coupled to said frame (P2);
- at least one vegetable loading hopper (I), which is arranged above said drums (A, B) in a position that corresponds to said rotation axis (P1);
- at least one vegetable discharge outlet (Ua, Ub), which is provided on said horizontal table (P) in a position which is proximate to said rotation axis (P 1);
and wherein the rotation of said drums (A, B) first moves the vegetables away from the rotation axis (P1) of said horizontal table (P) and then returns the vegetables toward said rotation axis (P1) and toward said outlet (Ua, Ub).

2. The centrifugal drainer according to claim 1, **characterized in that** each one of said drums (A, B) comprises:
- two side-by-side and parallel rims (C1a, C1b; C2a, C2b), which are connected to said shaft (Aa, Ab) by means of spokes or arms (Ra, Rb);
- at least one cylindrical draining surface (Sa, Sb), which is fixed to the spokes (Ra, Rb) of at least one of said rims (C1a, C1b) in a position which is coaxial to said shaft (Aa, Ab) and has a smaller diameter than said rims (C1a, C1b; C2a, C2b);
- at least one flat and perforated annular draining portion or grille (Ka, Kb), in which the smaller diameter is equal to the diameter of said cylindrical draining surface (Sa, Sb) and the larger diameter is equal to the diameter of said rims (C1a, C1b; C2a, C2b), and wherein said annular draining portion or grille (Ka, Kb) is fixed laterally between a lateral edge of said cylindrical draining surface (Sa, Sb) and one of said rims (C1a, C1b);
- at least one moving draining belt (Na, Nb), which is arranged so as to adhere externally to both of said rims (C1a, C1b; C2a, C2b).

3. The centrifugal drainer according to claims 1 and 2, **characterized in that** said drums (A, B) lie substantially on the same vertical plane of rotation.

4. The centrifugal drainer according to one of claims 2 and 3, **characterized in that** said moving draining belt (Na, Nb) is kept tensioned by means of appropriately provided tensioning rollers (N1a, N2a, N3a), which are fixed to said frame (P2) for supporting the drums (A, B) and is positioned so as to adhere to said rims (C1a, C1b; C2a, C2b) of the corresponding drum (A, B) on the semicircular portion thereof that lies furthest from said rotation axis (P1).

5. The centrifugal drainer according to one of claims 2, 3, 4, **characterized in that** said moving draining belt (Na, Nb) comprises a series of protruding vanes or blades (La, Lb), which are designed to convey the leaves of vegetables that adhere to the annular draining portion (Ka, Kb) and to the internal surface of said moving draining belt (Na, Nb) itself.

6. The centrifugal drainer according to one of the preceding claims, **characterized in that** it comprises at least one motor (M1) for the rotation, on a horizontal plane, of said horizontal table (P), of said supporting frame (P2), and of said drums (A, B).

7. The centrifugal drainer according to one of the preceding claims, **characterized in that** it comprises at least one motor (M2a, M2b) for direct or indirect rotation on the vertical plane of each drum (A, B) and/or for the movement of each moving draining belt (Na, Nb).

8. The centrifugal drainer according to one of the preceding claims, **characterized in that** said drums (A, B) have a rotation rate on the vertical plane which is lower than the rotation rate on the horizontal plane of said horizontal table (P).

9. The centrifugal drainer according to one of claims 2-8, **characterized in that** said annular draining portions (Ka, Kb) and said moving draining belts (Na, Nb) are perforated, said holes being distributed uniformly and having such dimensions as to prevent the passage of the leaves of vegetables.

10. The centrifugal drainer according to one of the preceding claims, **characterized in that** it comprises an external enclosure (X), which is adapted to enclose said horizontal table (P), said drums (A, B) and said sliding belts (Na, Nb), and comprising an upper opening (Xi) for access to said loading hopper (I), a lower opening (Xu) for unloading the vegetables, at least one duct (Xw) for discharging the draining water, and one or more hatches for inspection and maintenance.

11. The centrifugal drainer according to one of the preceding claims, **characterized in that** it comprises one or more conveyor belts (Va, Vb) arranged below said discharge outlet (Ua, Ub) to convey the vegetables in output from said drainer.

12. The centrifugal drainer according to one of the preceding claims, **characterized in that** it comprises at least one substantially vertical wall (U1a, U1b), which is rigidly coupled to said horizontal table (P) and is arranged at said discharge outlet (Ua, Ub) and is adapted to facilitate the falling of the leaves into said discharge outlet (Ua, Ub).
